# EUROPÄISCHE PATENTSCHRIFT

(11) **EP 1 227 299 B1**
(45) Veröffentlichungstag und Bekanntmachung des Hinweises auf die Patenterteilung: **03.09.2008**
(21) Anmeldenummer: 02405032.0
(22) Anmeldetag: 21.01.2002
(51) Int. Cl.: G01B 11/26, G01B 11/27, G01B 11/275, B21D 1/14

(54) **Vorrichtung zur Ausmessung der Symmetrie einer Fahrzeugkarosserie**
Apparatus for measuring the symmetry of a vehicle body
Appareil pour mesurer la symétrie d'une carrosserie de véhicule

(30) Priorität: 25.01.2001 CH 1302001
(43) Veröffentlichungstag der Anmeldung: 31.07.2002
(73) Patentinhaber: Cenic, Brane, 8304 Wallisellen (CH)
(72) Erfinder: Cenic, Brane, 8304 Wallisellen (CH)
(74) Vertreter: Schneider Feldmann AG Patent- und Markenanwälte

(56) Entgegenhaltungen:
- EP-A- 0 676 617
- US-A- 3 962 796
- US-A- 4 615 618
- US-A- 4 630 379
- US-A- 5 207 002

## Beschreibung

Die vorliegende Erfindung betrifft eine Vorrichtung zur Ausmessung der Symmetrie einer Fahrzeugkarosserie, die sich auf einer Richtbank befindet, gemäss Oberbegriff des Patentanspruches 1.

Fahrzeugkarosserien sowohl von Personenwagen als auch von Nutzfahrzeugen sind spiegelsymmetrisch bezüglich einer vertikalen mittigen durch die Längsachse des Fahrzeuges verlaufenden Ebene. Durch eine Kollision triff oftmals nicht nur eine örtliche Verformung der äusseren Kontur auf, sondern die gesamte Karosserie des Fahrzeuges kann so verformt werden, dass die Symmetrie nicht mehr gegeben ist. Um diese Verformungen rückgängig zu machen, wird das havarierte Fahrzeug auf eine sogenannte Richtbank gestellt und darauf fixiert gehalten. Durch entsprechende Zugkräfte, die auf die deformierte Fahrzeugkarosserie ausgeübt werden, kann in den meisten Fällen die Symmetrie der Karosserie wieder erreicht werden. Die Ausmessung erfolgt bis heute einerseits von Auge und andererseits mit verschiedenen mechanischen Hilfsmitteln.

Praktisch bei jeder neuen Messung musste die Anordnung neu aufgestellt werden und die Messung mit entsprechenden Messbändern durchgeführt werden. Dies war nicht nur aufwendig, sondern zusätzlich auch noch ungenau.

Aus der US - 4 615 618 ist eine Vorrichtung zur Ausmessung der Symmetrie der Spurgenauigkeit eines Fahrzeugen bekannt, wobei die Vorrichtung eine Tragkonstruktion umfasst auf der zwei Punktlasser angeordnet sind, die an den beiden Enden eines horizontal gehaltenen, symmetrisch zu deren Mitte verlängerbaren und verkürzbaren Tragbalken gehalten sind. Mittels zusätzlichen Hilfsmitteln, die an der Fahrzeugkarosserie und an dessen Rädern anbringbar sind, lässt sich die Spurgenauigkeit überprüfen.

Ferner ist aus der EP 0 676 617 ein Tragbalken bekannt, der mittels zwei Kammern an der Richtbank befestigbar ist auf der das Fahrzeug steht. Der Tragbalken trägt an seinen Enden Laser schwenkbar gehalten. Die Enden des Tragbalkens sind bezüglich deren Mitte verlängerbar und verkürzbar und mittels Schrauben positioniert arretierbar.

Es ist daher die Aufgabe der vorliegenden Erfindung, eine Vorrichtung zu schaffen, mittels der die Ausmessung der Symmetrie einer Fahrzeugkarosserie bezüglich dessen vertikalen Symmetrieebene einfacher, schneller und entsprechend ohne wesentlichen Arbeits- und Zeitaufwand durchgeführt werden kann.

Diese Aufgabe löst eine Vorrichtung der eingangs genannten Art mit den Merkmalen des Patentanspruches 1.

Zur Benutzung der erfindungsgemässen Vorrichtung wird man zuerst die vertikale, mittige Symmetrieebene der Karosserie anzeichnen. Im einfachsten Fall erfolgt dies, indem man die Mitte der Frontscheibe und der Rückscheibe anzeichnet. Hierauf wird man den Strichlaser beziehungsweise die Tragkonstruktion so ausrichten, dass der Lichtfächer das Strichlasers genau durch die beiden angezeichneten Linien auf der Frontscheibe und Rückscheibe hindurch laufen.

Dabei kann die Tragkonstruktion völlig unabhängig von der Richtbank sein und aus einem entsprechend verstellbaren Stativ bestehen. Da aber in den Werkstätten oftmals ein Platzproblem besteht, kann es wünschbar sein, dass die Tragkonstruktion auf einem an der Richtbank befestigbaren Arm montierbar ist.

Während somit der einzige Strichlaser der Ausrichtung auf die vertikale Symmetrieebene dient, dienen die beiden Punktlaser der eigentlichen Ausmessung. In der vorliegenden Erfindung wird bevorzugt vorgeschlagen, den Tragbalken als doppelseitig teleskopisches Rohr zu gestalten. Dies erlaubt zudem eine Verschwenkung der beiden Punktlaser, die je an einem Ende der beiden teleskopisch ausziehbaren Rohre befestigt sind, und symmetrisch bezüglich der Mitte den Tragbalken verlänger- oder verkürzbar machen.

Weitere vorteilhafte Ausgestaltungsformen des Erfindungsgegenstandes gehen aus den abhängigen Patentansprüchen hervor und sind in der nachfolgenden Beschreibung mit Bezug auf die Zeichnung erläutert.
In der Zeichnung ist ein einziges, bevorzugtes Ausführungsbeispiel des Erfindungsgegenstandes dargestellt und nachfolgend beschrieben.
- Figur 1: zeigt die schematische Darstellung eines Fahrzeuges auf einer Richtbank und die erfindungsgemässe Vorrichtung mit einer an der Richtbank befestigten Tragkonstruktion;
- Figur 2: zeigt diese Tragkonstruktion für sich allein und
- Figur 3: zeigt das doppelseitige teleskopische Rohr sowie die beiden Punktlaser und den mittigen Strich-laser.
- Figur 5: stellt eine Lösung mit einer Tragkonstruktion in der Form eines Stativs dar und

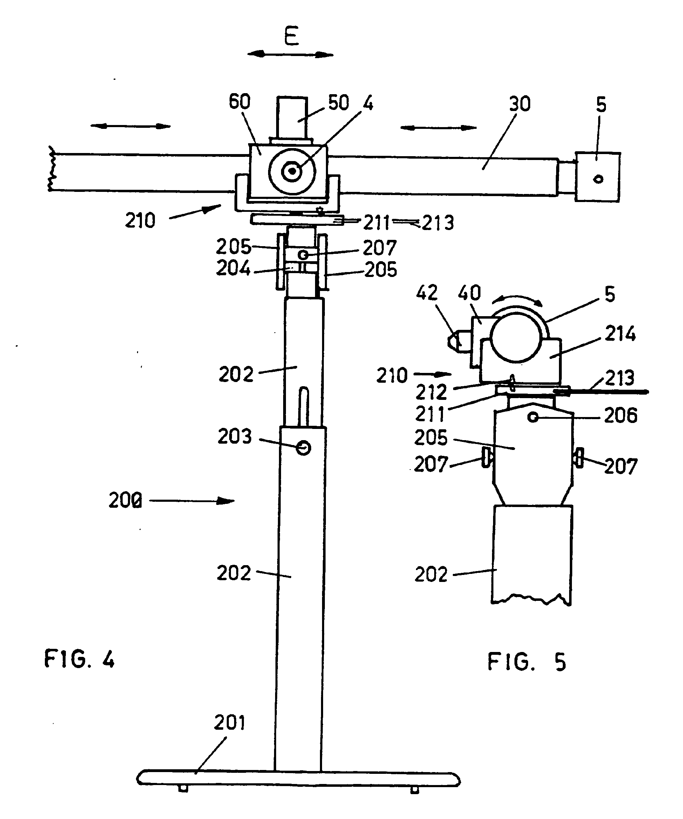

- Figur 5: einen speziellen Haltekopf für das doppelseitig teleskopische Rohr.

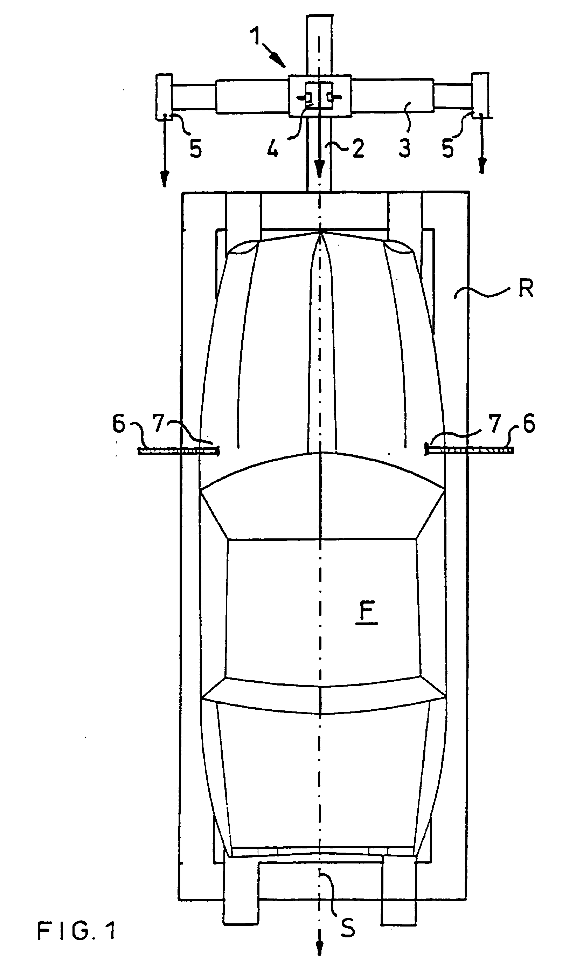

In der Figur 1 erkennt man ein schematisch und vereinfacht dargestelltes mit F bezeichnetes Fahrzeug, welches sich auf einer Richtbank R befindet. Das Fahrzeug F ist auf der Richtbank R mittels üblichen Fixiermitteln gehalten. Die mittige, vertikale Symmetrieebene S, die durch die Mitte des Fahrzeuges F verläuft, ist strichpunktiert eingezeichnet und verläuft nach entsprechender Ausrichtung auch genau durch die Optik eines Strichlasers 4, der Teil der Vorrichtung 1 zur Ausmessung der Symmetrie der Fahrzeugkarosserie F ist. Die Vorrichtung 1 zur Ausmessung der Symmetrie ist auf einer Tragkonstruktion 2 gehalten, die Teil der gesamten Vorrichtung 1 ist, obwohl unterschiedlichste Tragkonstruktionen 2 denkbar sind. Ferner umfasst die Vorrichtung 1 einen Tragbalken 3, der einerseits einen Strichlaser 4 und andererseits zwei endständig an den beiden Enden des Tragbalkens 3 angeordnete Punktlaser 5 umfasst. Zur Ausmessung können an definierten Punkten des Fahrzeuges F Messlatten 6, die mit permanenten Haftmagneten 7 an der Fahrzeugkarosserie F lösbar befestigt werden können, benutzt werden. Zur Ausmessung wird man den Tragbalken 3 in der Länge so einstellen, dass die beiden Punktlaser 5 etwa mittig auf die Messlatten 6 ausgerichtet sind. Nun können die beiden Punktlaser 5 je für sich in eine senkrecht zur Verlaufsrichtung des Tragbalkens 3 verlaufende Ebene geschwenkt werden, bis sie auf die Messlatten 6 auftreffen, oder der Tragbalken 3 kann mittels der Tragkonstruktion 2 entsprechend hochgehoben oder abgesenkt werden, bis der Richtstrahl des Punktlasers 5 auf die entsprechende Messlatte 6 trifft. Im Normalfall wird man jedoch nicht mittels der Tragkonstruktion die Ausrichtung vornehmen, sondern wie bereits erwähnt durch Schwenkung der beiden Punktlaser 5. Auf diese Weise lässt sich feststellen, ob die beiden Punkte, an denen die Haftmagnete 7 befestigt sind, beide gleich weit von der Symmetrieachse S entfernt sind. Wie noch zu beschreiben sein wird, kann durch Umsetzung des Strichlasers 4 auch noch überprüft werden, ob die beiden Punkte, an denen die beiden Haftmagnete 7 angeordnet sind, sich auch noch auf derselben Höhe befinden.

Wie bereits eingangs erwähnt, lässt sich die Symmetrieebene S am einfachsten finden, indem man die Frontscheibe und die Rückscheibe an der oberen und unteren Kante ausmisst und die Mitte anzeichnet. Hierauf bringt man auf den entsprechenden Scheiben Linien an, auf die der Strichlaser 4 ausrichtbar ist. In vielen Fällen sind sogar Schweissnähte erkennbar, welche diese Mitte anzeichnen.

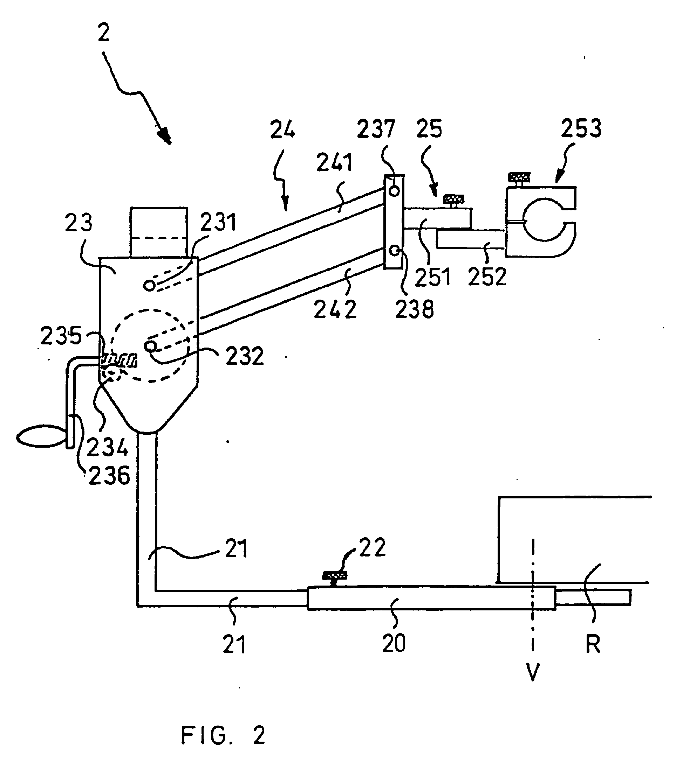

In der Figur 2 ist eine Ausführungsform einer Tragkonstruktion gezeigt. Hierbei ist die Tragkonstruktion 2 mit der Richtbank R direkt verbunden. Die Tragkonstruktion 2 kann aus einem fest an der Richtbank angeschweissten Profilrohr 20 bestehen, in dem ein abgewinkeltes Stativrohr 21 längsverschieblich gehalten und beispielsweise mittels einer oder mehrerer Arretierschrauben 22 arretierbar ist. Auf dem abgewinkelten Stativrohr 21 ist ein Schwenkmechanismus 23 befestigt. Mittels dem Schwenkmechanismus 23 lässt sich ein Parallelogrammschwenkarm 24 auf und ab schwenken. Am Parallelogrammschwenkarm 24 ist ein Haltemechanismus 25 befestigt. Dank der Parallelogrammschwenkarmkonstruktion verbleibt der Haltemechanismus trotz Auf- und Abbewegung in einer genau eingestellten Horizontalausrichtung. Der Parallelogrammschwenkarm 24 besteht aus einem oberen parallelen Arm 41, der um eine Achse 231 schwenkbar ist und einem unteren parallelen Arm 242, der in einer unteren Drehachse 232 geschwenkt werden kann. Die Schwenkachsen 231 und 232 sind exakt vertikal übereinander ausgerichtet, genau so wie die beiden Drehachsen 237 und 238, die in einer vertikalen Tragplatte 239 angeordnet sind, welche Teil eines Haltemechanismus' 25 ist. Auf der Drehachse für den unteren parallelen Arm 242 lagert eine Zahnscheibe 233, welche mit einem Ritzel 234 kämmt und fest im Gehäuse des Schwenkmechanismus' 23 angeordnet ist. Das Ritzel 234 wird getrieben durch eine Schnecke 235, die vom Benutzer mittels einer Kurbel 236 betätigt werden kann. Auf diese Weise kann der Haltemechanismus 25 exakt auf und ab bewegt werden bei gleichbleibender horizontaler Ausrichtung. Bei einer Auf- oder Abbewegung des Parallelogrammschwenkarmes 24 verbleibt so die Tragplatte 239 in exakt vertikaler Richtung. An dieser Tragplatte 239 ist fest eine horizontal verlaufende Podestplatte 241 befestigt, beispielsweise angeschweisst. Diese Podestplatte ist schwenkbeweglich und arretierbar mit einer zweiten Platte 252 verbunden, an der eine Schraubklemme 253 fest angeordnet ist. Mittels der Schraubklemme 253 kann der Tragbalken 3 gehalten werden. Im Normalfall ist die zweite Platte 252 so breit gestaltet, dass an derselben zwei Schraubklemmen um eine gewisse Strecke voneinander distanziert anbringbar sind.

Ohne dass hierauf näher eingegangen wird, wird man vorteilhafterweise das Profilrohr 20 um eine Achse V als Verschwenkachse in einem gewissen Winkelbereich verstellbar gestalten. Dies ist jedoch optional. Die Podestplatte 251 und die zweite Platte 252 sind bereits zueinander drehbeweglich gelagert und arretierbar. In den meisten Fällen genügt dies für die mittige Ausrichtung des Strichlasers 4.

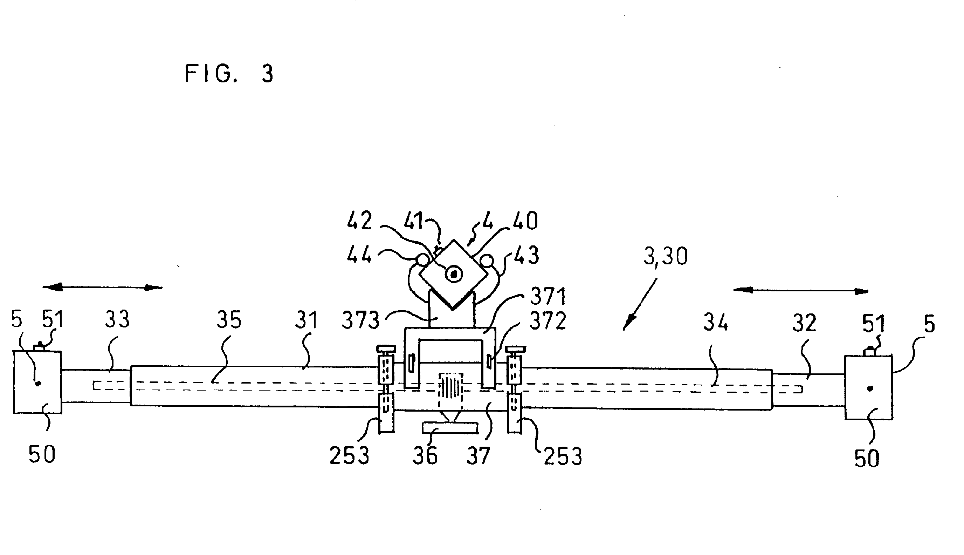

In der Figur 3 ist insbesondere das Tragrohr 3 als doppelseitiges Teleskoprohr 30 ausgeführt dargestellt. Das doppelseitige Teleskoprohr 30 besteht aus einem äusseren Rohr 31, in dem rechts ein inneres Rohr 32 und links ein inneres Rohr 33 gelagert dargestellt ist. In den inneren Rohren 32 und 33 sind Zahnstangen 34,35 befestigt, die einander diametral gegenüber liegen. Die Zahnstange 34 ist hierbei im inneren Rohr 32, die Zahnstange 35 im inneren Rohr 33 angebracht. Diese beiden Zahnstangen 34 und 35 kämmen ein Antriebsmittel 36, welches mittig im äusseren Rohr 31 angeordnet ist. Hierbei handelt es sich um ein Verstellritzel 36, das von Hand getrieben werden kann. Durch Drehung in die eine Richtung werden die beiden inneren Rohre 32,33 nach aussen hin und bei Drehung in die Gegenrichtung nach innen bewegt. Beide Bewegungen erfolgen gleichzeitig und in gleichem Ausmass. Damit sind die beiden Punktlaser 5 bezüglich der Mitte immer gleich weit von derselben entfernt. Das doppelseitige Teleskoprohr 30 wird von den beiden Schraubklemmen 253 gehalten. Die mittige Positionierung wird dadurch erreicht, dass mittig auf dem äusseren Rohr 31 des doppelseitigen Teleskoprohres 30 eine Verdickung 37 in Form einer fest darauf angeordneten Manschette vorhanden ist. Die beiden zuvor beschriebenen Schraubklemmen 253 sind an der zweiten Platte 252 so angeordnet, dass die erwähnte, manschettenartige Verdickung 37 genau formschlüssig zwischen den beiden Klemmen 253 gehalten werden kann. Auf dieser erwähnten Verdickung 37 ist ein Tragschemel 371 lösbar aufgesetzt. Der Tragschemel wird exakt positioniert mittels entsprechender Zentrierstifte 372, mittels derer eine kombinierte form- und kraftschlüssige Verbindung erzielbar ist, um sicherzustellen, dass der Tragschemel 371 exakt in horizontaler als auch vertikaler Ausrichtung und genau mittig auf der erwähnten Verdickung 37 aufsetzbar ist. Auf dem Tragschemel 371 ist eine prismatische Lageraufnahme 373 fest angeordnet. In dieser prismatischen Lageraufnahme 373 kann der Strichlaser 4, der in einem kubischen Gehäuse 40 untergebracht ist, eingelegt werden. In der prismatischen Lageraufnahme 373 wird dieses Gehäuse 40 mittels Blattfedern 43 und endseitig daran befestigten Rollen 44 kraftschlüssig in der prismatischen Aufnahme gehalten. Dies erlaubt durch einfache Wegnahme des Strichlasers 4 und wiederum Aufsetzen des Strichlasers 4 um 90° gedreht in die prismatische Lageraufnahme 373 den Strichlaser sowohl mit horizontaler als auch vertikaler Ausrichtung des Strahlenfächers zu verwenden. Hiermit lässt sich feststellen, ob zwei bezüglich der Symmetrieebene gleich weit voneinander entfernte Punkte auch bezüglich der Mitte auf gleicher Höhe sind. Interessant sind solche Messungen beispielsweise in Bezug auf die Dachkante des Fahrzeuges, in Bezug auf die unteren Türkanten oder auch in Bezug auf Punkte innerhalb des Motorraumes unterhalb der Motorhaube.

Die beiden Punktlaser 5 sind in zylindrischen Gehäusen 50 untergebracht. Diese zylindrischen Gehäuse 50 können bezüglich der Achse der inneren Rohre 32 und 33 geschwenkt werden. Aus praktischen Gründen sind alle drei Laser mit Batterie oder Akku betrieben. Zur Messung wird der Strahl jedes Lasers immer nur während einer relativ kurzen Zeit benötigt. Entsprechend sind an den jeweiligen Gehäusen auch Schalter 41,51 angeordnet, um die Laser batterie- oder akkubetrieben verwenden zu können, ohne dabei unnötig viel Energie zu verbrauchen.

Ist der erforderliche Platzbedarf vorhanden, so kann, wie erwähnt, die gesamte Vorrichtung auf eine Tragkonstruktion, die als Stativ 200 gestaltet ist, aufgestellt werden. Eine solche Lösung ist in der Figur 4 dargestellt. Das Stativ 200 steht auf einem Stativfuss 201, auf dem ein Stativbein 202 befestigt ist. Das Stativbein 202 ist teleskopisch gestaltet und lässt sich mittels dem Höhenverstellknopf 203 auf der gewünschten Höhe arretieren. Auf dem oberen Ende des teleskopischen Stativbeines 202 ist ein Stativkopf 204 befestigt. Dieser besteht aus zwei Stativkopfplatten 205, in denen eine zentrale Trägersäule um eine Neigeachse 206 schwenkbar und mittels den Neigungseinstelllnöpfen 207 in der gewünschten Lage einstellbar gehalten ist. Darüber befindet sich ein Haltekopf 210. Dieser Haltekopf 210, der in der Figur 5 in etwas grösserem Massstab und um 90° gedreht dargestellt ist, hat eine Lagerplatte 211. Diese Lagerplatte 211 hat einen Exzentermitnehmer 212, der in einer Führungskurve eingreift, die an der Unterseite des Lagerjoches 214 eingeformt ist. An der Lagerplatte 211 ist ein Exzenterbetätigungshebel 213 befestigt. Durch eine Schwenkbewegung, ausgeübt am Exzenterbetätigungshebel 213, lässt sich der gesamte Haltekopf 210 gegenüber der Lagerplatte 211 und somit auch gegenüber dem Stativbein 202 aus dem Zentrum nach links oder rechts bewegen, wie dies der Doppelpfeil E andeutet. Es genügt somit, das Stativ 200 mindestens annähernd mittig vor oder hinter dem Fahrzeug aufzustellen, worauf dann die exakte Ausmittung durch Betätigung des Hebels 213 erfolgen kann.

Die Lagerung des doppelseitigen Teleskoprohres 30 ist hier nicht mehr mittels Schraubklemmen gehalten, sondern liegt in den entsprechend gestalteten Seitenwangen des Lagerjoches 214. Der Strichlaser 4 ist in diesem Falle integriert am teleskopischen Rohr 30 montiert. Die Betätigung des teleskopischen Rohres erfolgt im hier dargestellten Beispiel mittels eines Elektromotors 50, der oben auf dem Gehäuse angeflanscht ist, in dem auch der Strichlaser 4 eingegliedert ist. Das Gehäuse 60, welches mit dem teleskopischen Rohr 30 fest verbunden ist, ist in der Grösse so gestaltet, dass es formschlüssig zwischen den Seitenwangen des Lagerjoches 214 passend liegt.

Der Stativfuss 201 kann, wie dies hier schematisch angedeutet ist, mit Nivellierschrauben ausgestaltet sein. Dies ist jedoch an sich nicht zwingend erforderlich, weil alle Korrekturmassnahmen bezüglich der Neigungen entweder mittels dem Stativkopf 204 oder mittels dem Haltekopf 210 erfolgen können.

Da, wie bereits erwähnt, der Strichlaser 4 nun in einem fest mit dem doppelseitigen Teleskoprohr verbundenen Gehäuse 60 angeordnet ist, muss dieses nicht mehr umgesetzt werden. Die Optik des Strichlasers ist nun drehbar gelagert, wofür Betätigungsstifte 45 vorhanden sind, mittels derer die entsprechende Optik zentrisch um 90° gedreht werden kann.

Prinzipiell sind die vertikale Lage und die horizontale Lage durch Anschläge definiert, doch können Zwischeneinstellungen mit einer beliebigen Neigung ebenso erfolgen.

### Liste der Bezugszahlen

- F: Fahrzeug
- R: Richtbank
- S: Symmetrieebene
- 1: gesamte Vorrichtung
- 2: Tragkonstruktion
- 3: Tragbalken
- 4: Strichlaser
- 5: Punktlaser
- 6: Messlatten
- 7: Permanente Haftmagnete
- 20: Profilrohr
- 21: Stativrohr abgewinkelt
- 22: Arretierschraube
- 23: Schwenkmechanismus
- 24: Parallelogrammschwenkarm
- 25: Haltemechanismus
- 200: Stativ
- 201: Stativfuss
- 202: Stativbein, teleskopisch
- 203: Höhenverstellknopf
- 204: Stativkopf
- 205: Stativkopfplatte
- 206: Neigeachse
- 207: Neigungseinstellknopf
- 210: Haltekopf
- 211: Lagerplatte
- 212: Exzentermitnehmer
- 213: Exzenterbetätigungshebel
- 214: Lagerjoch
- 231: Drehachse für oberen parallelen Arm 241
- 232: Drehachse für unteren parallelen Arm 242
- 233: Zahnscheibe
- 234: Ritzel
- 235: Schnecke
- 236: Kurbel
- 237: Drehachse
- 238: Drehachse
- 239: Tragplatte
- 241: oberer Arm
- 242: unterer Arm
- 251: Podestplatte
- 252: zweite Platte
- 253: Schraubklemme
- 30: doppelseitiges Teleskoprohr
- 31: äusseres Rohr
- 32: inneres Rohr
- 33: inneres Rohr
- 34: Zahnstange in innerem Rohr 32
- 35: Zahnstange in äusserem Rohr 33
- 36: Antriebsmittel, Verstellritzel
- 37: mittige Verdickung
- 371: Tragschemel
- 372: Zentrierstifte
- 373: prismatische Lageraufnahme
- 40: Gehäuse des Strichlasers
- 41: Schalter
- 42: Optik
- 43: Blattfedern
- 44: Rollen
- 45: Betätigungsstifte
- 50: Elektromotor
- 60: Gehäuse mit Teleskoprohr fest verbunden

## Patentansprüche

1. Vorrichtung (1) zur Ausmessung der Symmetrie einer Fahrzeugkarosserie (F), die sich auf einer Richtbank (R) befindet, wobei die Vorrichtung eine Tragkonstruktion (2) umfasst, auf der zwei Punktlaser (5) angeordnet sind, die an den beiden Enden eines horizontal gehaltenen, symmetrisch zu deren Mitte verlängerbaren und verkürzbaren Tragbalken (3) gehalten sind, **dadurch gekennzeichnet, dass** auf der Tragkonstruktion (2) weiterhin ein Strichlaser (4) angeordnet ist, der auf die vertikale Symmetrieebene der Karosserie ausrichtbar ist.

2. Vorrichtung nach Anspruch 1, **dadurch gekennzeichnet, dass** der Tragbalken (3) als doppelseitig teleskopisches Rohr (30) gestaltet ist.

3. Vorrichtung nach Anspruch 2, **dadurch gekennzeichnet, dass** im doppelseitig teleskopischen Rohr (30) ein mittiges Antriebsmittel (36) lagert, das auf zwei diametral einander gegenüberliegenden Seiten mit je einer Zahnstange (34,35) in Eingriff steht, so dass durch Drehung des Antriebsmittels (36) beide teleskopischen inneren Rohre (32,33), die mit je einer Zahnstange verbunden sind, um die gleiche Distanz gleichzeitig nach aussen oder zur Mitte verschiebbar sind.

4. Vorrichtung nach Anspruch 2, **dadurch gekennzeichnet, dass** die beiden Punktlaser (5) an den Enden des doppelseitig teleskopischen Rohres (30) schwenkbeweglich so angeordnet sind, dass der Strahl jedes Punktlasers (5) in einer senkrecht zur Längsrichtung des doppelseitig teleskopischen Rohres (30) verlaufenden Ebene verschwenkbar ist.

5. Vorrichtung nach Anspruch 1, **dadurch gekennzeichnet, dass** der Strichlaser (4) umsetzbar gehalten ist, so dass er zusätzlich zu einer vertikalen Ausstrahlrichtung auch in einer horizontalen Ausstrahlrichtung befestigbar ist.

6. Vorrichtung nach Anspruch 1, **dadurch gekennzeichnet, dass** die Tragkonstruktion einen vertikal in der Höhe verstellbaren Arm umfasst, auf dem mindestens zwei Schraubklemmen (253) angeordnet sind, die gabelförmig beidseitig an eine mittige Verdickung (37) des Tragbalkens (3) oder Rohres (30) anliegend den Tragbalken oder das Rohr greifen.

7. Vorrichtung nach Anspruch 1, **dadurch gekennzeichnet, dass** auf dem Tragbalken oder Rohr (3,30) mittig ein arretierender (372) Tragschemel (371) befestigbar ist, auf dem der Strichlaser (4) lösbar gehalten ist.

8. Vorrichtung nach Anspruch 7, **dadurch gekennzeichnet, dass** der Strichlaser (4) in einem kubischen Gehäuse (40) untergebracht ist und der Schemel (371) eine prismatische Lageraufnahme (373) umfasst, in der das kubische Gehäuse (40) des Strichlasers (4) so einlegbar gehalten ist, dass er sowohl einen horizontalen oder um 90° gedreht einen vertikalen Strich projektieren kann.

9. Vorrichtung nach Anspruch 8, **dadurch gekennzeichnet, dass** an der prismatischen Lagerhalterung (373) federnde (43) Rollen (44) als Klemmhalterung vorhanden sind.

10. Vorrichtung nach Anspruch 1, **dadurch gekennzeichnet, dass** die Tragkonstruktion (2) aus mindestens einem an der Richtbank (R) befestigbaren Profilrohr (20) und einem verstell- und arretierbar (22) darin gelagerten, abgewinkelten Stativrohr (21) besteht.

11. Vorrichtung nach Anspruch 1, **dadurch gekennzeichnet, dass** die Tragkonstruktion ein Stativ (200) ist mit teleskopisch höhenverstellbarem Stativbein (202) und einem Stativkopf (204), der eine Neigungsverstellung (206,207) des Tragbalkens (3) erlaubt.

12. Vorrichtung nach Anspruch 11, **dadurch gekennzeichnet, dass** unter dem Stativkopf (204) ein Haltekopf (210) angeordnet ist, der auf einer Lagerplatte (211) verschiebbar mittels Exzentermitnehmer (212) und Exzenterbetätigungshebel (213) gelagert ist.

13. Vorrichtung nach Anspruch 3, **dadurch gekennzeichnet, dass** am doppelseitigen teleskopischen Rohr (30) ein Gehäuse (60) fest angeordnet ist, in dem der Strichlaser (4) mit einer drehbaren (45) Optik (42) integriert ist.

14. Vorrichtung nach Anspruch 12 und 13, **dadurch gekennzeichnet, dass** der Haltekopf (210) mit einem Lagerjoch (214) ausgestaltet ist, in dem das doppelseitig teleskopische Rohr (30) lagert, wobei das Gehäuse (60) und das Lagerjoch (214) so gestaltet sind, dass diese formschlüssig zusammenfügbar sind.

## Claims

1. A device (1) for measuring the symmetry of a vehicle body (F), which is located on a straightening bench (R), wherein the device comprises a carrier construction (2), on which two point lasers (5) are arranged which are held at the two ends of a horizontally held carrier beam (3) which is extendable and shortenable symmetrically to their middle, **characterised in that** a line laser (4) is furthermore arranged on the carrier construction (2) and may be aligned to the vertical symmetry plane of the vehicle body.

2. A device according to claim 1, **characterised in that** the carrier beam (3) is designed as a double-sided telescopic tube (30).

3. A device according to claim 2, **characterised in that** a middle drive means (36) is mounted in the double-sided telescopic tube (30), said drive means being engaged in each case with a rack (34, 35) on two sides lying diametrically opposite one another, so that by way of rotation of the drive means (36), both telescopic inner tubes (32, 33) which are connected in each case to a rack, may be displaced simultaneously to the outside or to the middle, by the same distance.

4. A device according to claim 2, **characterised in that** the two point lasers (5) are arranged at the ends of the double-sided telescopic tube (30) in a pivotably movable manner, such that the beam of each point laser (5) may be pivoted in a plane running perpendicularly to the longitudinal direction of the tube (30) which is telescopic on both sides.

5. A device according to claim 1, **characterised in that** the line laser (4) is held in a displaceable manner, so that additionally to a vertical beaming direction, it may also be fastened in a horizontal beaming direction.

6. A device according to claim 1, **characterised in that** the carrier construction comprises a an arm which may be adjusted vertically in height, on which at least two screw clamps (253) are arranged, which in a fork-like manner on both sides, bearing onto a middle thickening (37) of the carrier beam (3) or of the tube (30), grip the carrier beam or the tube.

7. A device according to claim 1, **characterised in that characterised in that** a locking (372) carrier frame (371) may be fastened centrally on the carrier beam or tube (3, 30), and on which the line laser (4) is held in a releasably manner.

8. A device according to claim 7, **characterised in that** the line laser (4) is accommodated in a cubic housing (40) and the frame (371) comprises a prismatic bearing receiver (373), in which the cubic housing (40) of the line laser (4) may be held in an insertable manner, such that it may project a horizontal line or a vertical one rotated by 90°.

9. A device according to claim 8, **characterised in that** resilient (43) rollers (44) as a clamping holder are present on the prismatic bearing holder (373).

10. A device according to claim 1, **characterised in that** the carrier construction (2) consists of at least one profile tube (20) which may be fastened on the straightening bench (R), and of an adjustable and lockable (22) stand tube (21) which may be angled and which is mounted in said profile tube.

11. A device according to claim 1, **characterised in that** the carrier construction is a stand (200) with a telescopically height-adjustable stand leg (202) and a stand head (204) which permits an inclination adjustment (206, 207) of the carrier beam (3).

12. A device according to claim 11, **characterised in that** a holding head (210) is arranged below the stand head (204) and is mounted on a bearing plate (211) in a displaceable manner by way of eccentric catch(es) (212) and eccentric actuation lever(s) (213).

13. A device according to claim 3, **characterised in that** a housing (60) is firmly arranged on the doubled-sided telescopic tube (30), in which housing the line laser (4) with rotatable (45) optics (42) is integrated.

14. A device according to claim 12 and 13, **characterised in that** the holding head (210) is designed with a bearing yoke (214), in which tube (30) telescopic on both sides is mounted, wherein the housing (60) and the bearing yoke (214) are designed such that these may be joined together with a positive fit.

## Revendications

1. Dispositif (1) de mesure de la symétrie d'une carrosserie de véhicule (F) se trouvant sur un marbre (R), ce dispositif comprenant une construction porteuse (2) sur laquelle sont disposés deux lasers à point (5) qui sont maintenus aux deux extrémités d'une poutre porteuse (3) maintenue horizontalement et pouvant être rallongée et raccourcie symétriquement par rapport à leur centre, **caractérisé en ce qu'**est disposé en outre sur la construction porteuse (2) un laser à trait (4) qui peut être aligné sur le plan de symétrie vertical de la carrosserie.

2. Dispositif selon la revendication 1, **caractérisé en ce que** la poutre porteuse (3) est réalisée sous forme d'un tube télescopique des deux côtés (30).

3. Dispositif selon la revendication 2, **caractérisé en ce que**, dans le tube télescopique des deux côtés (30), s'appuie un moyen moteur (36) qui est en prise sur deux côtés opposés diamétralement l'un à l'autre à chaque fois avec une crémaillère (34, 35) de sorte que, en tournant le moyen moteur (36), on peut déplacer sur la même distance vers l'extérieur ou vers le centre les deux tubes internes télescopiques (32, 33) qui sont reliés chacun à une crémaillère.

4. Dispositif selon la revendication 2, **caractérisé en ce que** les deux lasers à point (5) sont disposés de manière mobile en pivotement aux extrémités du tube télescopique des deux côtés (30) de manière à ce que le rayon de chaque laser à point (5) puisse pivoter dans un plan s'étendant perpendiculairement au sens longitudinal du tube télescopique des deux côtés (30).

5. Dispositif selon la revendication 1, **caractérisé en ce que** le laser à trait (4) est maintenu de manière variable, de sorte qu'il peut en plus être fixé aussi dans un sens vertical d'irradiation même en sens horizontal d'irradiation.

6. Dispositif selon la revendication 1, **caractérisé en ce que** la construction porteuse comprend un bras réglable verticalement en hauteur sur lequel sont disposées au moins deux attaches vissées (253) qui sont en prise en forme de fourche des deux côtés, en reposant au niveau d'un épaississement central (37) de la poutre porteuse (3) ou du tube (30), sur la poutre porteuse ou le tube.

7. Dispositif selon la revendication 1, **caractérisé en ce que**, sur la poutre porteuse ou le tube (3, 30), au centre, on peut fixer au centre une sellette support (371) de blocage (372) sur laquelle le laser à trait (4) est maintenu de manière dissociable.

8. Dispositif selon la revendication 7, **caractérisé en ce que** le laser à point (4) est logé dans un boîtier cubique (40) et que la sellette (371) comprend un support de palier prismatique (373) dans lequel le boîtier cubique (40) du laser à trait (4) est maintenu en pouvant être inséré de manière à pouvoir projeter aussi bien un trait horizontal qu'un trait vertical en le tournant de 90°.

9. Dispositif selon la revendication 8, **caractérisé en ce que** des rouleaux (44) en suspension (43) sont prévus comme fixation par serrage au niveau du support de palier prismatique (373).

10. Dispositif selon la revendication 1, **caractérisé en ce que** la construction porteuse (2) est composée d'au moins un tube profilé (20) pouvant être fixé au marbre (R) et d'un tube de support coudé (21) pouvant être réglé et bloqué (22) s'appuyant dedans.

11. Dispositif selon la revendication 1, **caractérisé en ce que** la construction porteuse (2) est un support (200) doté d'une jambe de support télescopique réglable en hauteur (202) et d'une tête de support (204) qui permet un réglage d'inclinaison (206, 207) de la poutre porteuse (3).

12. Dispositif selon la revendication 11, **caractérisé en ce que**, sous la tête de support (204) est disposée une tête de retenue (210) qui s'appuie de manière déplaçable au moyen d'un entraîneur à excentrique (212) et d'un levier d'actionnement d'excentrique (213) sur une plaque d'appui (211).

13. Dispositif selon la revendication 3, **caractérisé en ce que**, au niveau du tube télescopique des deux côtés (30), est disposé fixement un boîtier (60) dans lequel le laser à point (4) est intégré avec une optique (42) pouvant tourner (45).

14. Dispositif selon les revendications 12 et 13, **caractérisé en ce que** la tête de retenue (210) est réalisée avec une armature de palier (214) dans laquelle le tube télescopique des deux côtés (30) s'appuie, le boîtier (60) et l'armature de palier (214) étant conformés de manière à pouvoir être assemblés en correspondance géométrique.
